# EUROPEAN PATENT APPLICATION

(11) **EP 3 524 811 A1**
(43) Date of publication of application: **14.08.2019**
(21) Application number: 17861064.8
(22) Date of filing: 26.05.2017
(51) Int. Cl.: F03D 7/02, F03D 1/02, F03D 9/25, H02K 7/18, F03D 80/70

(54) **WIND POWER GENERATOR ALLOWING TRACKING WIND DIRECTION**

(30) Priority: 10.10.2016 KR 20160130477
(71) Applicant: GL Co., Ltd., Yangsan-si, Gyeongsangnam-do 50547 (KR)
(72) Inventor: BANG, Boo-Hyeon, Ganghwa-gun Incheon 23058 (KR)
(74) Representative: MacLachlan & Donaldson
(86) International application number: PCT/KR2017/005509
(87) International publication number: WO 2018/070628

(57) **Abstract**

This statement pertains to a wind power generator. More specifically, a wind deflector is added to the wind power generator. So a function to track the wind direction automatically according to the changes of the wind and a wind speed diffusing equipment are added to the wind power generator so that the durability of the generator is improved.

This statement illustrates the wind-direction tracking wind power generator that contains characteristically all the features as follows: the central axis that expands above and below inside; the structure that is located in the middle of the central axis and furnishes the ring that forms horizontally around the central axis; the rotary axis that is located in the middle of the central axis, is formed horizontally, is connected to the ring, and can rotate along with the ring; the central axis bearing that connects the central axis and the rotary axis, and makes the rotary axis rotate with the central axis as the center; the generating part that is combined with the rotary axis, and furnishes the generator, rotor blades, and the bearing; and the yawing part that is locate at the rear part of the generating part, is combined with the end of the rotary axis, and furnishes the wind deflector and the bearing;

Furthermore, the wind-direction tracking wind power generator may contain additionally the wind-speed diffusing equipment that is open when the strong wind blows, and the wind-deflector anti-rotation equipment that furnishes the auxiliary bearing.

The wind power generator in this statement tracks the wind direction automatically with the wind deflector combined, and as the result increases the efficiency of the wind power generator effectively. Besides, the wind power generator in this statement furnishes the wind-speed diffusing equipment, and prevents the damages of the wind power generator when the wind of high speed is applied drastically, as well as prevents the damages of the loaded electric devices when the high current is generated drastically in effect.

## Description

### [Technical Field]

This statement pertains to a wind power generator. More specifically, a wind power generator is equipped with a wind speed diffuser which can track the wind direction automatically according to the changes of the wind direction by means of a wind deflector so that the durability of the wind power generator can be improved.

### [Background Technics of the Invention]

Wind power generators generate the electric power by means of the wind. When the wind rotates the rotary wings, its rotatory power drives the generator to produce the electric power.

Generally, a wind power generator is consisted of rotary wings and a generator. The generator makes the magnetic field by a centric rotator and an external stator which covers outside of it to produce the electric power. The basic principle of the generator's operation follows the Ampere's law and Faraday's law of electromagnetic induction.

Besides, the wind speed at the average 4m/s at least is required for the wind power generator to operate properly. And when the wind direction is vertical to the rotary wings, its efficiency reaches the maximum level.

The patent invention of the registration number 10-1288177 pertains to the non-powered wind-direction-automatic-tracking wind power generator. This invention can equip the wind power generator with a wind direction tracker. As a result, no matter how the wind direction changes, the rotor housing can always rotate toward the wind direction. Additionally, a wind direction buffering member is mounted so that the vertical frame is protected not to be broken off even though the instantaneous wind velocity increases drastically. Given that this patent invention of the wind direction tracker has a limitation in the operation range, and its join location and operation method of the wind direction buffering member are different from those of the content presented in this statement and the problem-solving principle.

### [Content of the Invention]

### [Task to be Solved]

This statement illustrates the wind power generator which can improve its efficiency of the electric power even at the place where the wind speed is comparatively low. Besides, the efficiency of the electric power can be improved by tracking the wind direction automatically according to the changes of the wind direction. And, even when the wind of high velocity is applied drastically, the wind speed can be diffused so that the durability of the wind power generator can be improved.

### [Solution of the Task]

The wind power generator in this statement is equipped with the wind direction tracking function. Specifically, the wind deflector is equipped with it so that the rotary axis rotates according to the changes of the wind direction to improve the efficiency of the wind power generator. The wind deflector, which is located in the rear part of the rotary axis, rotates the rotary axis according to the changes of the wind direction, and matches the wind direction with the direction of the rotary axis. Besides, the wind deflector is equipped with multiple rotor blades so that the efficiency of the wind power generator is improved even by the wind of the comparatively low speed.

Additionally, the wind power generator in this statement is equipped with the wind speed diffuser. The wind speed diffuser, which is located at the front part of the wind power generator, remains in the folded condition at the wind of the comparatively low speed, and is unfolded at the wind of the comparatively high speed to diffuse the wind at the constant speed.

### [Effect of the Invention]

The wind power generator in this statement tracks the wind direction automatically with the combination of the wind diffuser. Effectively, the efficiency of the wind power generator is increased.

Besides, as a result, the wind power generator herein is equipped with the wind speed diffuser which prevents the damages of the wind power generator when the wind of the comparatively high speed is applied drastically. In addition, the wind speed diffuser prevents the damages of the loaded electric devices when the high current is produced drastically.

### [Brief Description of the Drawings]

Drawing 1 is a perspective view of the wind-direction-tracking wind power generator by an embodiment example in this statement.
Drawing 2 is a side cross-sectional diagram of the wind-direction-tracking wind power generator by an embodiment example in this statement.
Drawing 3 is a side disassembly perspective view of the generative part by an embodiment example in this statement.
Drawing 4 is a side disassembly perspective view of the wind speed divider by an embodiment example in this statement.
Drawing 5 is a diagram of the wind speed divider in operation condition by an embodiment example in this statement. Drawing 5a is a cross-sectional diagram of the generator in the normal condition, and Drawing 5b is a cross-sectional diagram when the strong wind blows.
Drawing 6 is a side perspective view of the wind direction tracking part by an embodiment example in this statement.
Drawing 7 is a rea view of the wind direction tracking part by an embodiment example in this statement.

### [Specific Content to Execute the Invention]

Hereinafter, the wind-direction-tracking wind power generator (10) is explained by a desirable embodiment example while referring the Drawings.

The embodiment example to be described hereafter can include the range where those who have general knowledge in the technical field can carry out by applying the well-known and commonly used technics. It is not limited only to the content in this statement.

The terms in this statement can be replaced by ones that are commonly used in the field where this invention belongs to.

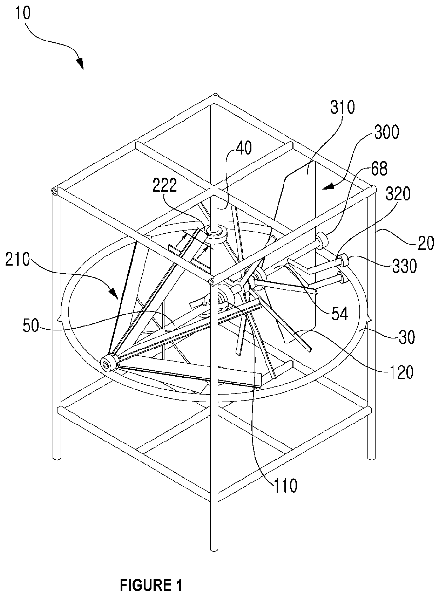

Drawing 1 is a perspective view of the wind-direction-tracking wind power generator (10) by an embodiment example.

As depicted in Drawing 1, the structure (20) must be designed to be able to support the central axis (40) and ring (30).

The central axis bearing (42) may be combined in the middle of the central axis (400), and the central axis bearing (42) is combined with the rotary axis (60). The central bearing described above is fixed firmly not to move above and below with the central axis (40) as the center in order to rotate the rotary axis (50) with the central axis as the center.

The first bearing (62) is combined with the front part of the rotary axis (50), and the fourth bearing (68) is combined with the end of the rear part of the rotary axis. The central axis bearing (42), the first bearing (62) and the fourth bearing (68) facilitate the rotary axis (50) to rotate easily with the central axis (40) as the center.

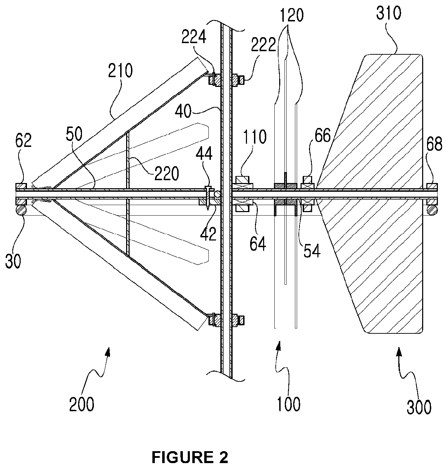

Drawing 2 is a side cross-sectional view of the wind-direction-tracking wind power generator.

The embodiment example forms the pole which constitutes the rotary axis. It is consisted of the first rotary pole (52), and the second rotary pole (54) and the third rotary pole for convenience's sake.

The first bearing (62) is combined with the end of the front part of the first rotary axis (52), and it can rotate easily with the central axis as the center. The wind-speed divider (200) may be formed in the middle of the first rotary pole (52).

The central axis bearing (42) is combined with the end of the rear part of the first rotary axis (52). According the embodiment example depicted in Drawing 2, the end of the rear part of the first rotary axis (52) and the central axis bearing (42) may be combined by nails or nuts. The kinds of the fasteners are not limited.

The second bearing (64) is combined with the end of the front part of the second rotary pole (54). And it is combined with the central axis bearing (42). According to the embodiment example depicted in Drawing 2, the central axis bearing (42) and the second bearing (64) may be combined by nails or nuts. The kinds of the fasteners are not limited.

The third bearing (66) is combined between the second rotary pole (54) and the third rotary pole (56). Thus, the second rotary pole (54) can rotate freely with the rotary axis (50) as the center, while the third rotary pole (56) does not rotate.

The generator (110) can be formed around the second bearing (54). The generator above does not rotate. The generator (110) may be combined with the second bearing (54) or with the central axis bearing (42) above mentioned.

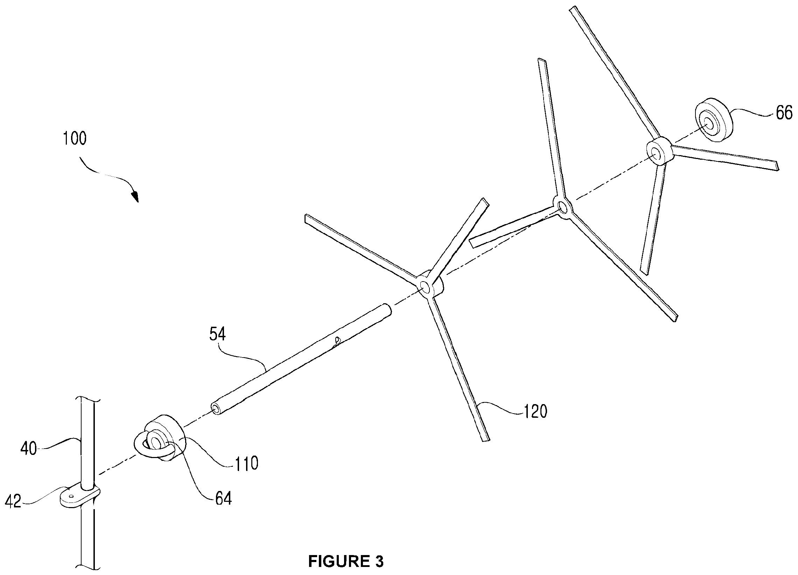

Drawing 3 is a disassembly diagram of the second rotary pole (54) and the generating part (100).

The second rotary pole (54) may form the rotor blades (120). The above rotor blades (120) rotate the second rotary pole (54) when the wind blows.

As depicted in the embodiment example at Drawing 3, the characteristic attribute is that the number of the blades of the rotor blades (120) is three. But, the number of the blades of the rotor blades is not limited. Those who have general knowledge in this field can change the number of the blades of the rotor blades.

As depicted in the embodiment example at Drawing 3, the characteristic feature is that the number of the rotor blades (120) is three. When multiple rotor blades are combined, they can transfer the sufficient rotary power to the second rotary pole (54) even by the comparatively weak wind. Thus, in the way that they occupy less room than the one big rotor blade, and the rotation is easy with the weight reduced, they have an effect to improve the efficiency of the wind power generator as a result.

As depicted in the embodiment example at Drawing 3, when the rotor blades (120) are observed from the front side, they can be made by the twisted form not to overlap one another completely. Thus, when the wind goes through each rotor blade, the rotation can be easy. And, the number of the rotor blades is not limited, and those who have general knowledge in this field can change the number of the rotor blades.

The embodiment example depicted at Drawing 3 may contain the generator (110).

The generator (110) contains a magnet which generates the magnetic field, and the coil is combined with the second rotary pole (54) inside of the generator. Thus, when the second rotary pole rotates, the rotatory power of the second rotary pole is transferred to the coil, and the rotation of the coil generates the induced electromotive force to produce electricity.

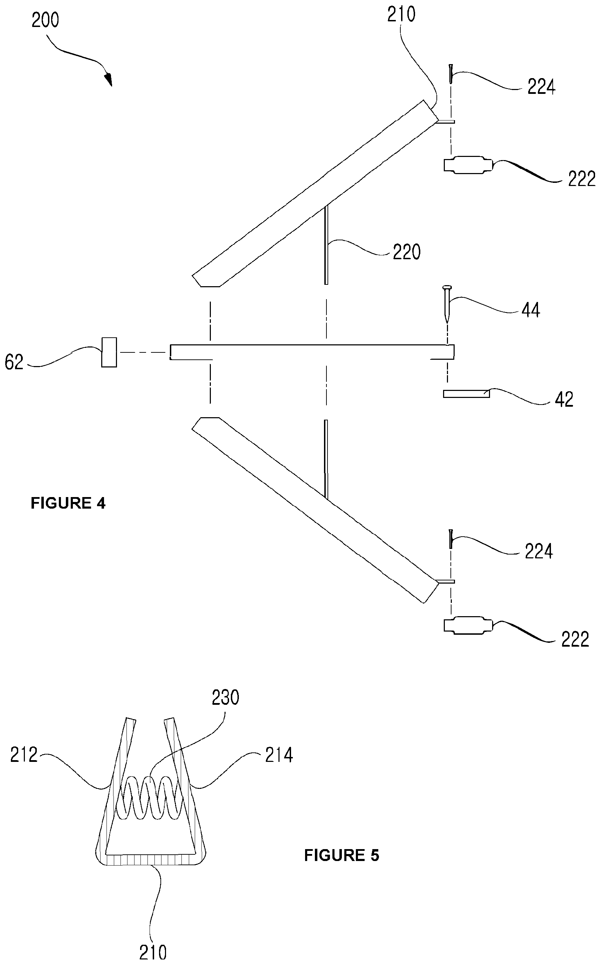

Drawing 4 is a disassembly perspective view which illustrates the wind-speed dividing part (200) according to the embodiment example in this statement.

The front side of the wind-speed divider is combined with the first rotary pole (52). The rear part of the above wind-speed divider reaches the central axis (40), and the rear part of the above wind-speed divider and the central axis are connected with the fixing board bearing (220). The fixing board bearing (222) can be made of the same kind of bearing as the central axis bearing (42). The read end of the wind-speed divider and the fixing board bearing (222) can be connected with a fixing pin. The fixing pin of the fixing board bearing can be made of the same kind of fixing pin as the pin that connects the central axis bearing (42) and the first rotary pole (52).

A part of the bottom of the wind-speed divider is combined with the fixing board (220), and the fixing board is combined with the first rotary pole (52). The location of the fixing board can be changed, but it is desirable that it is located at the bottom center of the wind-speed divider.

The wind-speed divider slants from the front side to the rear side, and can meet the opposition of the wind.

The wind-speed divider can form the left side (212) and the right side (214). As depicted at Drawing 5, the left side and the right side of the wind-speed divider remain folded in the normal condition not to obstruct the air flow. When the strong wind blows, as depicted at Drawing 5, the wind force can exceed the elastic force of the spring (230). At this moment, the left side and the right side of the wind-speed divider are unfolded and can divide and reduce the wind speed. Thus, the rotor blades (120) rotate speedfully and prevent the generating part (100) from being damaged.

According to the embodiment example depicted at Drawing 5 and Drawing 5a, the wind-speed divider (210) may contain the spring (230). The spring connects the left side (212) and the right side (214) of the wind-speed divider. As depicted at Drawing 5a, the left side and the right side remain folded in the normal condition. So, the wind-speed divider does not prevent the movement of the wind when the wind does not blow.

According to the embodiment example of Drawing 4, the spring may be located at the rear part of the wind-speed divider (210). When the spring is located at the rear part of the wind-speed divider, the front part of the wind-speed divider may be open first. Then, the rear part is open more easily because it meets the opposition of the wind more.

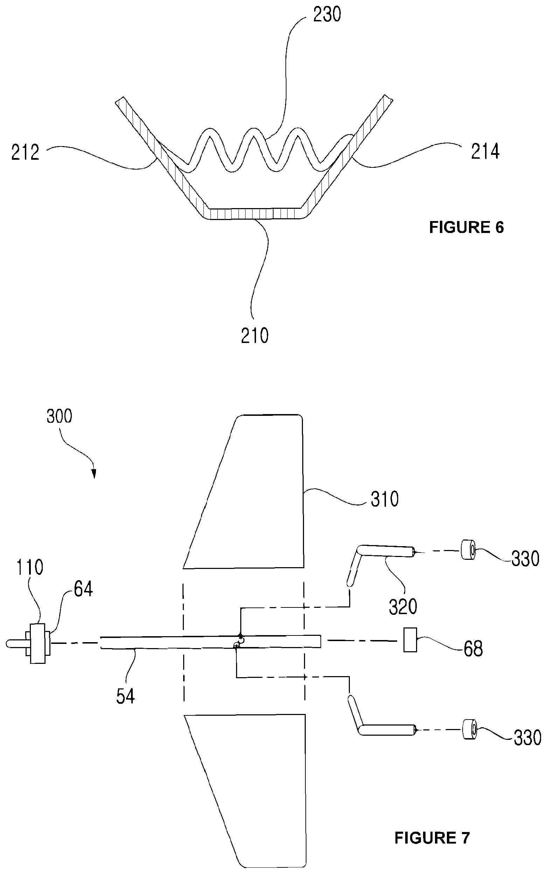

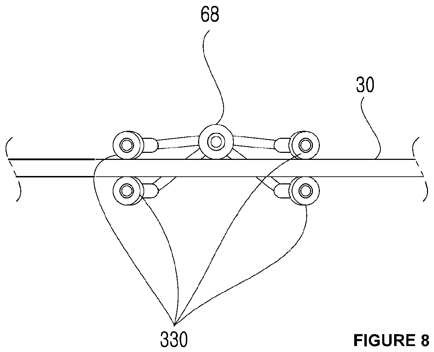

Drawing 6 is a disassembly perspective view which illustrates the wind-direction tracking part (300) according to the embodiment example in this statement.

The front part of the third rotary pole (56) is combined with the rear part of the second rotary pole (54) by the third bearing (66). The rear part of the third rotary pole (56) is combined with the ring (30) by the fourth bearing (68).

As depicted at Drawing 6, the two deflectors of the upper part and the bottom part of the wind deflector (310) are combined vertically with the third rotary pole (56). When the wind direction changes, the wind deflector (310) drives the rotary axis to start yawing according to the wind direction. At this time, the central axis bearing (42), the first bearing (62) and the fourth bearing (68) reduce the frictional force, and help the rotary axis to star yawing easily.

According to the embodiment example in this statement, as depicted at Drawing 6, the auxiliary bearing supporter (320) may be formed at the side of the third rotary pole (56), and the auxiliary bearing (330) may be combined at the end of the auxiliary bearing supporter.

Drawing 7 is a rear view which shows the rear part of the wind-direction tracking part (300) according to the embodiment example in this statement.

As depicted at Drawing 7, the auxiliary bearing (330) may be consisted of four auxiliary bearings: left, right, upper and bottom respectively. The auxiliary bearing (330) prevents the wind power generator from rolling, and improves the efficiency of the wind power generator. Those who have general knowledge can change the number and the combination form of the auxiliary bearing.

### [Explanation of the Signs]

10: Wind-direction tracking wind power generator
20: Structure
30: Ring
40: Central axis
42: Central axis bearing
44: Fixing pin
50: Rotary axis
52: The First rotary pole
54: the Second rotary pole
56: The third rotary pole
62: The first bearing
64: The second bearing
66: The third bearing
68: The fourth bearing
100: Generating part
111: Generator
120: Rotor blade
200: Wind-speed divider part
210: Wind-speed divider
212: Left side of the wind-speed divider
214: Right side of the wind-speed divider
220: Fixing board
222: Fixing board bearing
224: Fixing board bearing fixing pin
230: Spring
300: Wind-direction tracking part
310: Wind deflector
320; Auxiliary bearing supporter
330: Auxiliary bearing

## Claims

1. A wind-direction tracking wind power generator having a structure that includes a central axis which expands above and below inside and a ring which is located in the middle of the central axis and is formed horizontally around the central axis;
a rotary axis that is located in the middle of the central axis, is formed horizontally, is combined with the ring, and can rotate around the ring;
a central bearing that connects the central axis and the rotary axis, and allows the rotary axis rotate with the central axis as the center;
a generating part that is combined with the rotary axis, and comprises a generator, rotor blades and the bearing;
a yawing part that is located at the rear of the generating part, is combined with the end of the rotary axis, and provides the wind deflector and bearing.

2. A wind-direction tracking wind power generator as claimed in Claim 1 in which the generating part comprises:
a pole that divides the central axis into three parts, a second rotary pole that is located in the middle of it;
a second bearing that connects the front end of the second rotary pole to the central axis bearing;
the generator being located outside of the second bearing, and combined with the second bearing;
multiple rotor blades being combined around the second rotary pole; and
the pole that divides the central axis into three parts, a third rotary pole is located at the rear part, and a third bearing connects the second rotary pole above.

3. A wind-direction tracking wind power generator as claimed in Claim 1 in which a first rotary pole is located at the front part, when the pole divides the central axis into three parts;
the wind power generator has additionally a wind-speed diffusing part that is located at the front part of the central bearing, of which one part is combined with the first rotary pole, and of which the other part is connected to the central axis and the fixing bearing, and of which one part is combined with the first rotary pole by a fixing board, of which the both ends remain folded by a spring, and reduces the wind speed when a strong wind blows.

4. A wind-direction tracking wind power generator as claimed in Claim 1 in which an auxiliary bearing supporter of which one part is combined with the rear part of a third rotary pole and expands right and left, and of which the other part reaches the ring above and below respectively;
the auxiliary bearing connects the other part of the auxiliary bearing supporter and the ring.

5. A wind-direction tracking wind power generator as claimed in Claim 1 in which the wind power generator includes an auxiliary bearing supporting board which expands from the side of the wind-direction tracking axis to the right side or to the left side; and of which one side reaches the top and the bottom of the supporting ring from the fight and the left respectively;
an auxiliary bearing connecting the auxiliary bearing supporting board and the supporting ring.
